Europäisches Patentamt

European Patent Office

Office européen des brevets

(11) **EP 1 021 649 B1**

(19)

(12) **EUROPÄISCHE PATENTSCHRIFT**

(45) Veröffentlichungstag und Bekanntmachung des Hinweises auf die Patenterteilung:
**15.05.2002 Patentblatt 2002/20**

(51) Int Cl.$^7$: **F02D 41/22**, F02D 41/14

(21) Anmeldenummer: **98952559.7**

(86) Internationale Anmeldenummer:
**PCT/DE98/02684**

(22) Anmeldetag: **10.09.1998**

(87) Internationale Veröffentlichungsnummer:
**WO 99/18343 (15.04.1999 Gazette 1999/15)**

(54) **VERFAHREN UND EINRICHTUNG ZUM ÜBERWACHEN EINER BRENNKRAFTMASCHINE**

METHOD AND DEVICE FOR SUPERVISING AN INTERNAL COMBUSTION ENGINE

PROCEDE ET DISPOSITIF POUR CONTROLER UN MOTEUR A COMBUSTION INTERNE

(84) Benannte Vertragsstaaten:
**DE FR GB SE**

(30) Priorität: **07.10.1997 DE 19744264**

(43) Veröffentlichungstag der Anmeldung:
**26.07.2000 Patentblatt 2000/30**

(73) Patentinhaber: **SIEMENS AKTIENGESELLSCHAFT
80333 München (DE)**

(72) Erfinder:
• **ZHANG, Hong
D-93057 Regensburg (DE)**
• **ACHLEITNER, Erwin
D-93083 Obertraubling (DE)**

(56) Entgegenhaltungen:
**DE-A- 4 426 972          DE-A- 19 537 381
FR-A- 2 739 331**

**Beschreibung**

Die Erfindung betrifft ein Verfahren und eine Einrichtung zum Überwachen einer Brennkraftmaschine, insbesondere einer Brennkraftmaschine mit Direkteinspritzung des Kraftstoffs und/oder weitgehender drosselfreier Laststeuerung.

Bei einem bekannten Verfahren (DE 42 32 974 A1) zum Steuern einer Brennkraftmaschine wird ein Sollwert eines über den Luftmassenstrom einzustellenden Drehmoments in einer Einrichtung zur Drehmomentvorgabe ermittelt. Ein Schätzwert eines zündwinkelnormierten tatsächlichen Drehmoments wird entweder aus dem Meßsignal eines Drehmomentsensors abgeleitet oder aus dem in die Verbrennungskammern gesaugten Luftmassenfluß. Ein Verstellen eines Zündwinkels erfolgt abhängig von der Abweichung des Sollwertes von dem normierten Schätzwerts des Drehmoments. Drehmomentsensoren sind jedoch für einen Serieneinsatz noch zu teuer oder noch nicht zuverlässig genug. Das Bestimmen des tatsächlichen Drehmoments abhängig von dem erfaßten Luftmassenfluß liefert jedoch lediglich für Brennkraftmaschinen ausreichend genaue Werte, die über den Luftmassenstrom geführt sind.

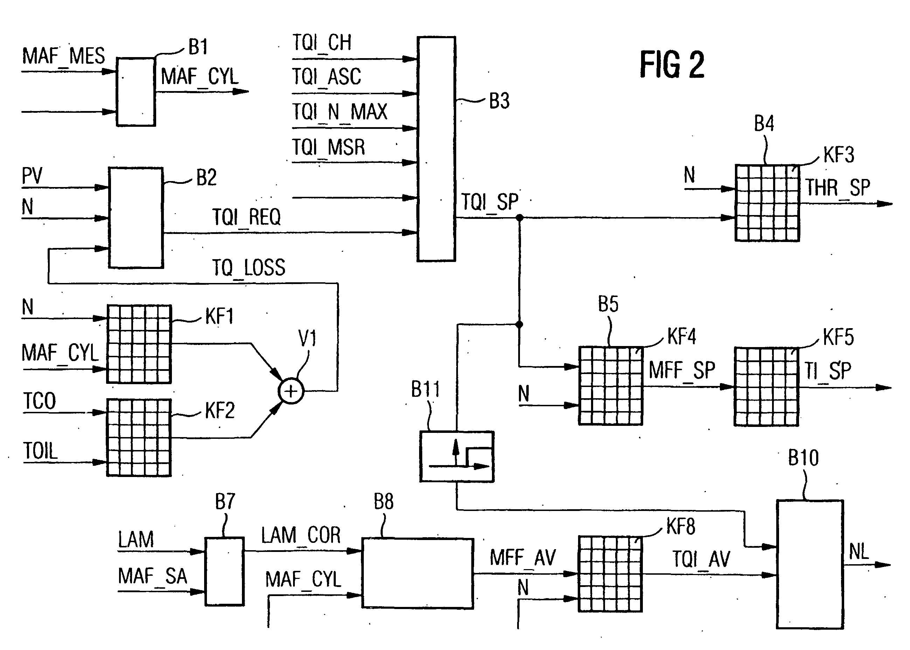

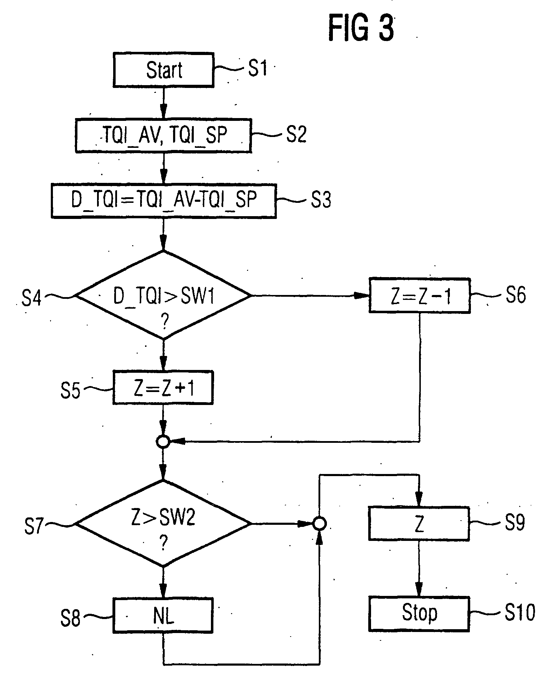

DE 195 37 381 A (BOSCH GMBH ROBERT, Figuren, Ansprüche, Sp.6) offenbart eine Fehlerüberwachung einer Brennkraftmaschine, bei der im Fehlerfall ein Notfahrbetrieb vorgesehen ist (Sp.6 , Z. 21), wobei ein Sollwert TI der Kraftstoffmasse (TI = Rechengröße der effektiven Einspritzzeit ohne Batterie -Spannungskorrektur) und ein Schätzwert der Kraftstoffmasse (TE= tatsächliche Ansteuerzeit) miteinander auf (ungefähre) Übereinstimmung geprüft werden, bzw. nach Fig. 2,3 (insbes. Schritt 304) werden LambdaWerte unter Berücksichtigung von im Abgas gemessen Lambda - Werten (Lambda-erw = f1 (TE) = te2 * f2( Lambda - Ist)) miteinander verglichen.

Die Aufgabe der Erfindung ist es, ein Verfahren und eine Einrichtung zum Überwachen einer Brennkraftmaschine zu schaffen, die mit einem hohen Luftüberschuß des Luft-/Kraftstoffgemisches betrieben wird, und das/die zuverlässig und einfach sind.

Die Aufgabe wird erfindungsgemäß durch die Merkmale der unabhängigen Patentansprüche gelöst.

Die Lösung gemäß der unabhängigen Patentansprüche 1, 6 und 9 zeichnet sich dadurch aus, daß ein Schätzwert des indizierten

Drehmoments mit einer hohen Güte berechnet wird, da die tatsächliche Kraftstoffmasse die entscheidende Einflußgröße für den Wert des tatsächlichen indizierten Drehmoments ist.

Die Erfindung hat den Vorteil, daß sie das Kraftstoffsystem überwacht, das die Kraftstoffpumpe und Einspritzventile umfaßt.

In einer vorteilhaften Ausgestaltung der Erfindung wird der Schätzwert der Kraftstoffmasse abhängig von einer Luftzahl rechnet, die von einer in dem Abgastrakt der Brennkraftmaschine angeordneten Sauerstoffsonde ermittelt wird. Die Luftzahl ist ein Meßwert, mit dem unabhängig von einem Sollwert der Kraftstoffmasse der Schätzwert der Kraftstoffmasse berechnet wird.

Weitere vorteilhafte Ausgestaltungen der Erfindung sind in den Unteransprüchen gekennzeichnet.

Ausführungsbeispiele der Erfindung sind anhand der schematischen Zeichnungen näher erläutert. Es zeigen:

Figur 1    eine Brennkraftmaschine mit einer Überwachungseinrichtung,
Figur 2    ein Blockschaltbild der Überwachungseinrichtung,
Figur 3    ein Flußdiagramm des Überwachungsalgorithmus
Figur 4    ein weiteres Blockschaltbild der Überwachungseinrichtung.

Elemente gleicher Konstruktion und Funktion sind figurenübergreifend mit den gleichen Bezugszeichen versehen.

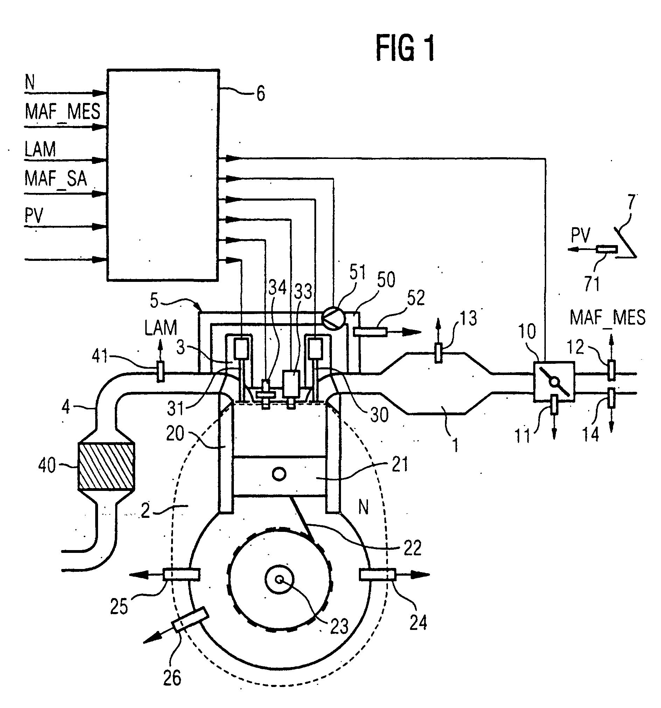

Eine Brennkraftmaschine (Figur 1) umfaßt einen Ansaugtrakt 1 mit einer Drosselklappe 10 und einen Motorblock 2, der einen Zylinder 20 und eine Kürbelwelle 23 aufweist. Ein Kolben 21 und eine Pleuelstange 22 sind dem Zylinder 20 zugeordnet. Die Pleuelstange 22 ist mit dem Kolben 21 und der Kurbelwelle 23 verbunden.

Ein Zylinderkopf 3 ist vorgesehen, in dem ein Ventiltrieb angeordnet ist mit mindestens einem Einlaßventil 30 und einem Auslaßventil 31. Der Ventiltrieb umfaßt mindestens eine nicht dargestellte Nockenwelle mit einer Übertragungseinrichtung, die den Nockenhub auf das Einlaßventil 30 oder das Auslaßventil 31 überträgt. Es können auch Einrichtungen zum Verstellen der Ventilhubzeiten und des Ventilhubverlaufs vorgesehen sein. Alternativ kann auch ein elektromechanischer Aktor vorgesehen sein, der den Ventilhubverlauf des Ein- oder Auslaßventils 30, 31 steuert.

In den Zylinderkopf 3 ist ferner ein Einspritzventil 33 und eine Zündkerze 34 eingebracht. Das Einspritzventil 33 ist so angeordnet, daß der Kraftstoff direkt in den Raum des Zylinders 20 zugemessen wird. Das Einspritzventil 33 kann aber auch so angeordnet sein, daß die Zumessung des Kraftstoffs im Ansaugtrakt 1 erfolgt. Die Brennkraftmaschine ist in der Figur 1 mit einem Zylinder dargestellt. Sie kann jedoch auch mehrere Zylinder umfassen.

Ein Abgastrakt 4 mit einem Katalysator 40 und einer Sauerstoffsonde 41 ist der Brennkraftmaschine zugeordnet. Eine Sekundärlufteinrichtung 5 hat ein Sekundärluftrohr 50, das von dem Ansaugtrakt 1 zu dem Abgastrakt 4 geführt ist. In dem Sekundärluftrohr 50 ist eine Sekundärluftpumpe 51 angeordnet.

Eine Überwachungseinrichtung, die im folgenden als Steuereinrichtung 6 bezeichnet ist, weil sie neben der Überwachung der Brennkraftmaschine auch Steuerungsfunktionen der Brennkraftmaschine übernimmt, ist vorgesehen, der Sensoren zugeordnet sind, die verschiedene Meßgrößen erfassen und jeweils den Meßwert der Meßgröße ermitteln. Die Steuereinrichtung 6 ermittelt abhängig von mindestens einer Meßgröße ein oder mehrere Stellsignale, die jeweils ein Stellgerät steuern.

Die Sensoren sind ein Pedalstellungsgeber 71, der eine Pedalstellung PV des Fahrpedals 7 erfaßt, ein Drosselklappenstellungsgeber 11, der einen Öffnungsgrad der Drosselklappe 10 erfaßt, einen Luftmassenmesser 12, der einen Luftmassenstrom erfaßt und/oder ein Saugrohrdrucksensor 13, der einen Saugrohrdruck in dem Ansaugtrakt 1 erfaßt, ein erster Temperatursensor 14, der eine Ansauglufttemperatur TAL erfaßt, ein Drehzahlgeber 24, der eine Drehzahl N der Kurbelwelle 23 erfaßt, ein Sekundärluftmassenmesser 52, der einen Sekundärluftmassenstrom MAF_SA in dem Sekundärluftrohr 50 erfaßt, ein zweiter und dritter Temperatursensor 25, 26, die eine Kühlmitteltemperatur TCO. beziehungsweise eine Öltemperatur TOIL erfassen, und die Sauerstoffsonde 41, die den Restsauerstoffgehalt des Abgases in dem Abgastrakt 4 erfaßt und die diesem eine Luftzahl LAM zuordnet. Je nach Ausführungsform der Erfindung kann eine beliebige Untermenge der genannten Sensoren oder auch zusätzliche Sensoren vorhanden sein.

Betriebsgrößen umfassen die Meßgrößen sowie von diesen abgeleitete Größen, die über ein Kennfeldzusammenhang oder von einem Beobachter ermittelt werden, der Schätzwert der Betriebsgrößen berechnet.

Die Stellgeräte umfassen jeweils einen Stellantrieb und ein Stellglied. Der Stellantrieb ist ein elektromotorischer Antrieb, ein elektromagnetischer Antrieb, ein mechanischer oder ein weiterer dem Fachmann bekannter Antrieb. Die Stellglieder sind als Drosselklappe 10, als Einspritzventil 11, als Zündkerze 34 oder als eine Einrichtung zum Verstellen des Ventilhubs der Ein- oder Auslaßventile 30, 31 ausgebildet. Auf die Stellgeräte wird im folgenden mit dem jeweils zugeordneten Stellglied bezug genommen.

Die Steuereinrichtung ist vorzugsweise als elektronische Motorsteuerung ausgebildet. Sie kann jedoch auch mehrere Steuergeräte umfassen, die elektrisch leitend miteinander verbunden sind, so zum Beispiel über ein Bussystem.

Im folgenden wird die Funktion des erfindungsrelevanten Teils der Steuereinrichtung 7 anhand des Blockschaltbilds von Figur 2 und des Flußdiagramms der Figur 3 beschrieben.

In einem Block B1 (Figur 2) wird ein Schätzwert MAF_CYL des Luftmassenstroms in den Zylinder 20 mit einem Füllungsmodell des Ansaugtraktes 1 abhängig von dem Meßwert MAF_MES des Luftmassenstroms und weiteren Betriebsgrößen berechnet. Ein derartiges Modell ist in der WO 96/32579 offenbart, deren Inhalt diesbezüglich einbezogen ist.

Ein Kennfeld KF1 ist vorgesehen, aus dem ein erster Beitrag zu einem Verlustdrehmoment TQ_LOSS abhängig von der Drehzahl N, dem Schätzwert MAF_CYL des Luftmassenstroms in dem Zylinder 20 ermittelt wird. Der erste Beitrag zu dem Verlustdrehmoment TQ_LOSS berücksichtigt Pumpverluste in der Brennkraftmaschine und Verluste, die durch die Reibung bei vorgegebenen Referenzwerten der Kühlmitteltemperatur TCO und der Öltemperatur TOIL auftreten. Ein zweiter Beitrag zu dem Verlustdrehmoment wird aus einem Kennfeld KF2 abhängig von der Öltemperatur TOIL und/oder der Kühlmitteltemperatur TCO ermittelt. In einem Verknüpfungspunkt V1 werden dann die Beiträge des Verlustdrehmoments TQ_LOSS addiert.

In einem Block B2 wird ein minimal und ein maximal zur Verfügung stellbares Drehmoment abhängig von dem Verlustdrehmoment TQ_LOSS und der Drehzahl N ermittelt. Aus der Pedalstellung PV und der Drehzahl N wird ermittelt, welcher Anteil des zur Verfügung stehenden Drehmoments von dem Fahrer angefordert wird. Aus dem vom Fahrer angeforderten Anteil des Drehmoments, dem zur Verfügung stellbaren Drehmoment und dem Verlustdrehmoment TQ_LOSS wird dann ein gewünschtes indiziertes Drehmoment TQI_REQ ermittelt.

Bei einem indizierten Drehmoment handelt es sich jeweils um das Drehmoment, das idealerweise ohne Berücksichtigung von . Verlusten erzeugt wird.

In einem Block B3 wird ein Sollwert TQI_SP des indizierten Drehmoments abhängig von dem gewünschten indizierten Drehmoment TQI_REQ und weiteren Drehmomentanforderungen ermittelt. Diese Drehmomentanforderungen sind beispielsweise ein zum Aufheizen des Katalysators 41 angefordertes Drehmoment, TQI_CH, eine Drehmomentenanforderung TQI_ASC einer AntiSchlupfregelung, eine Drehmomentenanforderung TQI_N_MAX einer Drehzahlbegrenzungsfunktion oder die Drehmomentanforderung TQI_MSR einer Motorschleppmomentregelung.

Über ein Kennfeld KF3 wird einem Block B3 dem Sollwert TQI_SP des indizierten Drehmoments abhängig von der Drehzahl N ein Sollwert des Öffnungsgrades THR_SP der Drosselklappe zugeordnet. Eine besonders genaue Berechnung des Sollwertes THR_SP des Öffnungsgrades der Drosselklappe wird erreicht, wenn in dem Block B4 auch Strömungsverluste durch den reduzierten Strömungsquerschnitt der Drosselklappe 10 im Ansaugtrakt berücksichtigt werden. Der Sollwert THR_SP wird einem Regler zugeführt, der ein Stellsignal zum Steuern der Drosselklappe 10 erzeugt.

Die Berechnung des Sollwertes THR_SP des Öffnungsgrades der Drosselklappe erfolgt auch abhängig davon, ob die Brennkraftmaschine mit einer Schichtladung oder einer homogenen Ladung betrieben wird.

Ein Block B5 umfaßt ein Kennfeld KF4, aus dem abhängig von der Drehzahl N und dem Sollwert TQI_SP des indizierten Drehmoments ein Sollwert MFF_SP der Kraftstoffmasse ermittelt wird, die pro Arbeitsspiel in den Zylinder 20 einzuspritzen ist. Das Ermitteln des Sollwertes MFF_SP der Kraftstoffmasse in dem Block B5 kann zusätzlich unter Berücksichtigung weiterer Betriebsgrößen, und abhängig davon erfolgen, ob die Brennkraftmaschine mit Schichtladung oder mit homogener Ladung betrieben wird, oder mit Hilfe zusätzlicher dynamischer Übertragungsglieder.

In einem Kennfeld KF5 wird abhängig von dem Sollwert MFF SP der Kraftstoffmasse ein Sollwert einer Einspritzzeitdauer TI_SP und gegebenenfalls auch eines Einspritzbeginnwinkels ermittelt. Das Einspritzventil 33 wird dann entsprechend des Sollwertes TI_SP der Einspritzzeitdauer und des Einspritzbeginnwinkels gesteuert.

In einem Block B7 wird die Luftzahl LAM abhängig von dem Sekundärluftmassenstrom MAF_SA korrigiert. Die korrigierte Luftzahl LAM_COR repräsentiert mit hoher Genauigkeit die Luftzahl im Brennraum nach der Verbrennung des Luft-/Kraftstoffgemisches. In einem Block B4 wird abhängig von der korrigierten Luftzahl LAM_COR und dem Schätzwert MAF_CYL des Luftmassenstroms des Zylinders 20 der Schätzwert MFF_AV der tatsächlichen Kraftstoffmasse ermittelt. Die Ermittlung des Schätzwertes MFF_AV erfolgt nach folgender Beziehung:

$$MFF\_AV = MAF\_CYL / (LAM\_COR \cdot L\_ST)$$

mit L_ST stöchiometrischer Faktor.

Ein Schätzwert TQI_AV des tatsächlichen indizierten Drehmoments wird aus einem Kennfeld KF8 abhängig von dem Schätzwert MFF_AV der tatsächlichen Kraftstoffmasse und der Drehzahl N . ermittelt. Alternativ kann der Schätzwert TQI_AV auch über ein physikalisches Modell der Brennkraftmaschine ermittelt werden.

In Block B10 wird ein Steuersignal für einen Notlauf NL ermittelt. Die Eingangsgrößen des Blocks B10 sind der Sollwert TQI_SP des Drehmoments, der in einem Block B11 entsprechend einer Totzeit zeitverzögert wird, die abhängig ist von dem Einspritzbeginnwinkel des Einspritzventils 33 und dem Zeitpunkt, an dem die zugeordnete Luftzahl LAM von der Sauerstoffsonde 41 erfaßt wird. Die zweite Eingangsgröße des Blocks B10 ist der Schätzwert TQI_AV des indizierten Drehmoments. Die Funktionsweise des Blocks B10 wird im folgenden anhand des Flußdiagramms der Figur 3 beschrieben.

In einem Schritt S1 erfolgt der Start der Funktion, wobei der Wert eines Zählers Z aus einem Speicher eingelesen wird.

In einem Schritt S2 werden die Eingangsgrößen des Blocks B10, der Schätzwert TQI_AV und der Sollwert TQI_SP des indizierten Drehmoments erfaßt. In einem Schritt S3 wird die Differenz D_TQI des Schätzwertes TQI_AV und des Sollwertes TQI_SP des tatsächlichen indizierten Drehmoments ermittelt.

In einem Schritt S4 wird geprüft, ob die Differenz D_TQI größer ist als ein erster vorgegebener Schwellwert SW1. Ist dies der Fall, so wird in einem Schritt S5 der Zähler um den Wert eins erhöht. Ist dies jedoch nicht der Fall, so wird der Zähler in einem Schritt S6 um den Wert eins erniedrigt.

In einem Schritt S7 wird geprüft, ob der Zähler Z größer ist als ein vorgegebener zweiter Schwellenwert SW2. Ist dies der Fall, so wird eine Notlauffunktion NL in dem Schritt S8 gestartet. Die Notlauffunktion NL ist eine Drehmomentbegrenzung oder eine Drehzahlbegrenzung über die Einspritzung und/oder die Zündung und/oder die Füllung.

In einem Schritt S9 wird der Zähler Z gespeichert und einem Schritt S10 wird die Funktion beendet. Die Funktion wird bevorzugt periodisch abgearbeitet.

Alternativ kann die vorgegebene Bedingung für einen Notlauf auch derart ausgestaltet sein, daß die Differenz des Schätzwertes TQI_AV und des Sollwertes TQI_SP des indizierten Drehmoments für eine vorgegebene Zeitdauer integriert wird und zwar beginnend bei einem Zeitpunkt, an dem der Schätzwert TQI_AV größer wird als. der Sollwert TQI_SP des indizierten Drehmoments. Die Bedingung ist dann erfüllt, wenn das Integral größer ist als ein Schwellenwert. Die Bedingung kann auch beliebig anders ausgebildet sein.

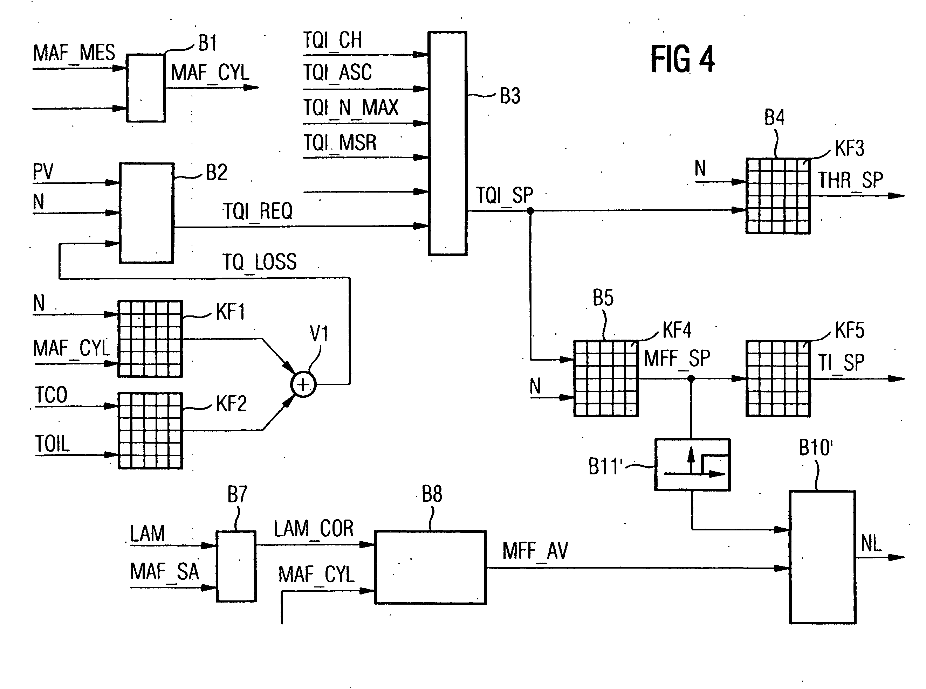

Eine weitere alternative Ausführungsform ist in Figur 4 dargestellt. In einem Block B10' wird das Steuersignal für den Notlauf NL ermittelt. Die Eingangsgrößen des Blocks B10' sind der Sollwert MFF_SP der Kraftstoffmasse, der in einem Block B11' entsprechend einer Totzeit zeitverzögert wird, die abhängig ist von dem Einspritzbeginnwinkel des Einspritzventils 33 und dem Zeitpunkt, an dem die zugeordnete Luftzahl LAM von der Sauerstoffsonde 41 erfaßt wird. Die zweite Eingangsgröße des Blocks B10' ist der Schätzwert MFF_AV der Kraftstoffmasse. Die Funktionsweise des Blocks B10' entspricht der des Blocks B10 aus Figur 3, wobei lediglich der Sollwert TQI_SP und der Schätzwert TQI_AV des indizierten Drehmoments durch den Sollwert MFF_SP und den Schätzwert MFF_AV der Kraftstoffmasse zu ersetzen sind.

Die Erfindung ist nicht auf die beschriebenen Ausführungsbeispiele beschränkt. So kann die Brennkraftmaschine auch als ein sogenannter Magermotor ausgebildet sein. Die Notlauffunktion kann auch eine Beschleunigungsbegrenzung sein. Die Kennfelder sind durch Versuche an einem Motorprüfstand, durch Fahrversuche oder durch Simulationen ermittelt. Die Sauerstoffsonde ist vorzugsweise als lineare Lambdasonde ausgebildet.

**Patentansprüche**

1. Verfahren zum Überwachen einer Brennkraftmaschine, bei dem

- ein Schätzwert (MFF_AV) der Kraftstoffmasse berechnet wird, die tatsächlich pro Arbeitsspiel in einen Zylinder (20) zugemessen wird, wobei der Schätzwert (MFF_AV) der Kraftstoffmasse abhängig von einer Luftzahl (LAM) berechnet wird, die von einer in dem Abgastrakt (4) der Brennkraftmaschine angeordneten Sauerstoffsonde (41) ermittelt wird,
- ein Schätzwert (TQI_AV) des indizierten Drehmoments der Brennkraftmaschine abhängig von dem Schätzwert (MFF_AV) der Kraftstoffmasse berechnet wird, und
- ein Notlauf (NL) der Brennkraftmaschine gesteuert wird, wenn der Schätzwert (TQI_AV) und ein Sollwert (TQI_SP) des indizierten Drehmoments eine vorgegebene Bedingung erfüllen.

2. Verfahren nach Anspruch 1, **dadurch gekennzeichnet, daß** die Luftzahl (LAM) abhängig von einem Sekundärluftmassenstrom (MAF_SA) korrigiert wird.

3. Verfahren nach einem der Ansprüche 1 bis 2, **dadurch gekennzeichnet, daß** der Schätzwert des indizierten Drehmoments zusätzlich abhängig von einem Massenstrom in den Zylinder ermittelt wird.

4. Verfahren nach einem der Ansprüche 1 bis 3, **dadurch gekennzeichnet, daß** der Sollwert (TQI_SP) des indizierten Drehmoments abhängig von einem Pedalwert (PV) und einer Drehzahl (N) ermittelt wird.

5. Verfahren nach einem der Ansprüch 1 bis 4, **dadurch gekennzeichnet, daß** die vorgegebene Bedingung ist, daß die Differenz des Schätzwertes (TQI_AV) und des Sollwertes (TQI_SP) länger als eine vorgegebene Zeitdauer größer ist als ein vorgegebener Schwellenwert (SW1).

6. Verfahren zum Überwachen einer Brennkraftmaschine, bei dem

- ein Schätzwert (MFF_AV) der Kraftstoffmasse berechnet wird, die tatsächlich pro Arbeitsspiel in einen Zylinder (20) zugemessen wird, wobei der Schätzwert (MFF_AV) der Kraftstoffmasse abhängig von einer Luftzahl (LAM) berechnet wird, die von einer in dem Abgastrakt (4) der Brennkraftmaschine angeordneten Sauerstoffsonde (41) ermittelt wird, und
- ein Notlauf (NL) der Brennkraftmaschine gesteuert wird, wenn der Schätzwert (MFF_AV) und ein Sollwert (MFF_SP) der Kraftstoffmasse eine vorgegebene Bedingung erfüllen.

7. Verfahren nach Anspruch 6, **dadurch gekenn-**

zeichnet, **daß** die Luftzahl (LAM) abhängig von einem Sekundärluftmassenstrom (MAF_SA) korrigiert wird.

8. Verfahren nach einem der Ansprüche 6 oder 7, **dadurch gekennzeichnet, daß** die vorgegebene Bedingung ist, daß die Differenz des Schätzwertes (MFF_AV) und des Sollwertes (MFF_SP) der Kraftstoffmasse länger als eine vorgegebene Zeitdauer größer ist als ein vorgegebener Schwellenwert.

9. Einrichtung zum Überwachen einer Brennkraftmaschine, die aufweist:

- ein erstes Mittel zum Berechnen eines Schätzwertes (MFF_AV) der Kraftstoffmasse, die pro Arbeitsspiel in einen Zylinder (20) zugemessen wird, wobei der Schätzwert (MFF_AV) der Kraftstoffmasse abhängig von einer Luftzahl (LAM) berechnet wird, die von einer in dem Abgastrakt (4) der Brennkraftmaschine angeordneten Sauerstoffsonde (41) ermittelt wird,
- ein zweites Mittel zum Berechnen eines Schätzwertes (TQI_AV) des indizierten Drehmoments der Brennkraftmaschine abhängig von dem Schätzwert (MFF_AV) der Kraftstoffmasse, und
- drittes Mittel zum Steuern eines Notlaufs (NL) der Brennkraftmaschine, wenn der Schätzwert (TQI_AV) und ein Sollwert (TQI_SP) des indizierten Drehmoments eine vorgegebene Bedingung erfüllen.

**Claims**

1. Method for monitoring an internal combustion engine, in which

- an estimated value (MMF_AV) of the amount of fuel which is actually metered into a cylinder (20) per working cycle is calculated, the estimated value (MFF_AV) of the amount of fuel being calculated as a function of an excess air factor (LAM) which is determined by an oxygen probe (41) arranged in the exhaust tract (4) of the internal combustion engine,
- an estimated value (TQI_AV) of the indicated torque of the internal combustion engine is calculated as a function of the estimated value (MFF_AV) of the amount of fuel, and
- an emergency operating mode (NL) of the internal combustion engine is actuated if the estimated value (TQI_AV) and a setpoint value (TQI_SP) of the indicated torque fulfil a predefined condition.

2. Method according to Claim 1, **characterized in that** the excess air factor (LAM) is corrected as a function of a secondary air mass flow rate (MAF_SA).

3. Method according to one of Claims 1 to 2, **characterized in that** the estimated value of the indicated torque is additionally determined as a function of a mass flow rate into the cylinder.

4. Method according to one of Claims 1 to 3, **characterized in that** the setpoint value (TQI_SP) of the indicated torque is determined as a function of a pedal value (PV) and a rotational speed (N).

5. Method according to one of Claims 1 to 4, **characterized in that** the predefined condition is that the difference between the estimated value (TQI_AV) and the setpoint value (TQI_SP) is greater than a predefined threshold value (SW1) for longer than a predefined time period.

6. Method for monitoring an internal combustion engine, in which

   - an estimated value (MFF_AV) of the amount of fuel which is actually metered into a cylinder (20) per working cycle is calculated, the estimated value (MFF_AV) of the amount of fuel being calculated as a function of an excess air factor (LAM) which is determined by an oxygen probe (41) arranged in the exhaust tract (4) of the internal combustion engine, and
   - an emergency operating mode (NL) of the internal combustion engine of the internal is actuated if the estimated value (MFF_AV) and a setpoint value (MFF_SP) of the amount of fuel fulfil a predefined condition.

7. Method according to Claim 6, **characterized in that** the excess air factor (LAM) is corrected as a function of a secondary air mass flow rate (MAF_SA).

8. Method according to one of Claims 6 or 7, **characterized in that** the predefined condition is that the difference between the estimated value (MFF_AV) and the setpoint value (MFF_SP) of the amount of fuel is greater than a predefined threshold value for longer than a predefined time period.

9. Device for monitoring an internal combustion engine which has:

   - a first means for calculating an estimated value (MFF_AV) of the amount of fuel which is metered into a cylinder (20) per working cycle, the estimated value (MFF_AV) of the amount of fuel being calculated as a function of an excess air factor (LAM) which is determined by an oxygen probe (41) arranged in the exhaust tract (4) of the internal combustion engine,
   - a second means for calculating an estimated value (TQI_AV) of the indicated torque of the internal combustion engine as a function of the estimated value (MFF_AV) of the amount of fuel, and
   - a third means for controlling an emergency operating mode (NL) of the internal combustion engine if the estimated value (TQI_AV) and a setpoint value (TQI_SP) of the indicated torque fulfil a predefined condition.

**Revendications**

1. Procédé pour contrôler un moteur à combustion interne, dans le cas duquel

   - une valeur estimée (MFF_AV) de la masse de carburant effectivement dosée dans un cylindre (20) par cycle de travail est calculée, la valeur estimée (MFF_AV) de la masse de carburant étant calculée en fonction d'un indice d'air (LAM) déterminé par une sonde d'oxygène (41) placée dans le système des gaz d'échappement (4) du moteur à combustion interne,
   - une valeur estimée (TQI_AV) du couple indiqué du moteur à combustion interne est calculée en fonction de la valeur estimée (MFF_AV) de la masse de carburant, et
   - une marche de secours (NL) du moteur à combustion interne est commandée lorsque la valeur estimée (TQI_AV) et une valeur prescrite (TQI_SP) du couple indiqué remplissent une condition prédéfinie.

2. Procédé selon la revendication 1, **caractérisé en ce que** l' indice d'air (LAM) est corrigé en fonction d'un débit massique d'air secondaire (MAF_SA).

3. Procédé selon l'une des revendications 1 à 2, **caractérisé en ce que** la valeur estimée du couple indiqué est déterminée en plus en fonction d'un débit massique dans le cylindre.

4. Procédé selon l'une des revendications 1 à 3, **caractérisé en ce que** la valeur prescrite (TQI_SP) du couple indiqué est déterminée en fonction d'une valeur de pédale (PV) et d'une vitesse de rotation (N).

5. Procédé selon l'une des revendications 1 à 4, **caractérisé en ce que** la condition prédéfinie est que la différence entre la valeur estimée (TQI_AV) et la valeur prescrite (TQI_SP) est supérieure à une valeur de série (SW1) prédéfinie pendant une durée plus longue que la durée de temps prédéfinie.

**6.** Procédé pour contrôler un moteur à combustion interne, dans le cas duquel

- une valeur estimée (MFF_AV) de la masse de carburant effectivement dosée dans un cylindre (20) par cycle de travail est calculée, la valeur estimée (MFF_AV) de la masse de carburant étant calculée en fonction d'un indice d'air (LAM) déterminé par une sonde d'oxygène (41) placée dans le système des gaz d'échappement (4) du moteur à combustion interne, et
- une marche de secours (NL) du moteur à combustion interne est commandée lorsque la valeur estimée (MFF_AV) et une valeur prescrite (MFF_SP) de la masse de carburant remplissent une condition prédéfinie.

**7.** Procédé selon la revendication 6, **caractérisé en ce que** l' indice d'air (LAM) est corrigé en fonction d'un débit massique d'air secondaire (MAF_SA).

**8.** Procédé selon l'une des revendications 6 ou 7, **caractérisé en ce que** la condition prédéfinie est que la différence entre la valeur estimée (MFF_AV) et la valeur prescrite (MFF_SP) de la masse de carburant est supérieure à une valeur de série (SW1) prédéfinie pendant une durée plus longue que la durée de temps prédéfinie.

**9.** Dispositif pour contrôler un moteur à combustion interne présentant :

un premier moyen pour calculer une valeur estimée (MFF_AV) de la masse de carburant dosée dans un cylindre (20) par cycle de travail, la valeur estimée (MFF_AV) de la masse de carburant étant calculée en fonction d'un indice d'air (LAM) déterminé par une sonde d'oxygène (41) placée dans le système des gaz d'échappement (4) du moteur à combustion interne,
- un deuxième moyen pour calculer une valeur estimée (TQI_AV) du couple indiqué du moteur à combustion interne en fonction de la valeur estimée (MFF_AV) de la masse de carburant, et
- un troisième moyen pour commander une marche de secours (NL) du moteur à combustion interne lorsque la valeur estimée (TQI_AV) et une valeur prescrite (TQI_SP) du couple indiqué remplissent une condition prédéfinie.

# FIG 1

FIG 2

EP 1 021 649 B1

# FIG 3

```
         ┌──────────┐
         │  Start   │───── S1
         └──────────┘
              │
              ▼
     ┌─────────────────┐
     │ TQI_AV, TQI_SP  │───── S2
     └─────────────────┘
              │
              ▼
 ┌──────────────────────────┐
 │ D_TQI=TQI_AV-TQI_SP      │───── S3
 └──────────────────────────┘
              │
              ▼
          ╱────────╲                          ┌──────────┐
  S4 ───╱  D_TQI>SW1 ╲───────────────────────│  Z=Z−1   │───── S6
        ╲     ?     ╱                          └──────────┘
          ╲────────╱                                │
              │                                      │
              ▼                                      │
        ┌──────────┐                                 │
  S5 ──│  Z=Z+1   │                                 │
        └──────────┘                                 │
              │                                      │
              ▼                                      │
              ○◄─────────────────────────────────────┘
              │
              ▼
          ╱────────╲                    ┌──────────┐
  S7 ───╱   Z>SW2   ╲──────────○        │    Z     │───── S9
        ╲     ?     ╱          │        └──────────┘
          ╲────────╱           │             │
              │                │             ▼
              ▼                │        ┌──────────┐
        ┌──────────┐           │        │   Stop   │───── S10
  S8 ──│    NL    │──────────┘        └──────────┘
        └──────────┘
```

FIG 4

EP 1 021 649 B1